# EUROPÄISCHE PATENTSCHRIFT

(11) **EP 2 837 461 B1**
(45) Veröffentlichungstag und Bekanntmachung des Hinweises auf die Patenterteilung: **24.05.2017**
(21) Anmeldenummer: 14173029.1
(22) Anmeldetag: 18.06.2014
(51) Int. Cl.: G01M 11/00, G01B 11/22, G01B 11/24, B23K 26/50, B23K 26/70, B23K 26/14, B23K 26/38

(54) **Verfahren zum Ermitteln eines Verschleißzustands einer Schneiddüse und Laserbearbeitungsmaschine zur Durchführung des Verfahrens**
Method for determining the wear on a cutting nozzle and laser processing machine for carrying out the method
Procédé de détermination d'un état d'usure d'une buse de coupe et machine de traitement au laser destiné à exécuter le procédé

(30) Priorität: 19.07.2013 DE 102013214174
(43) Veröffentlichungstag der Anmeldung: 18.02.2015
(73) Patentinhaber: TRUMPF Werkzeugmaschinen GmbH + Co. KG, 71254 Ditzingen (DE)
(72) Erfinder: Meindl, Ulrich, 71111 Waldenbuch (DE); Regaard, Boris, 70839 Gerlingen (DE)
(74) Vertreter: Kohler Schmid Möbus Patentanwälte

(56) Entgegenhaltungen:
- EP-A2- 1 600 247
- DE-A1-102011 104 550
- FR-A1- 2 911 081

## Beschreibung

Die Erfindung betrifft ein Verfahren zum Ermitteln eines Verschleißzustands einer Schneiddüse einer Laserbearbeitungsmaschine, wobei der Verschleißzustand der Schneiddüse mit folgenden Verfahrensschritten ermittelt wird:
a) Beleuchten der Schneiddüse mittels einer Beleuchtungseinrichtung,
b) Aufnehmen der beleuchteten Schneiddüse mittels einer Kameraeinrichtung,
c) Ermitteln des Verschleißzustands der Schneiddüse durch Auswerten der aufgenommenen Kameraaufnahme.

Die Erfindung betrifft auch eine Laserbearbeitungsmaschine zur Durchführung eines derartigen Verfahrens, umfassend einen Laserbearbeitungskopf mit einer daran angeordneten Schneiddüse und eine Sensoreinheit zur Erfassung der Schneiddüsenform mit einer Auswerteeinheit, die programmiert ist, den Verschleißzustand der Schneiddüse anhand der Schneiddüsenform zu ermitteln, wobei die Sensoreinheit eine Beleuchtungseinrichtung zum Beleuchten der Schneiddüse und eine Kameraeinrichtung zum Aufnehmen der beleuchteten Schneiddüse umfasst.

Ein solches Verfahren und eine solche Vorrichtung sind durch die EP 1 600 247 A2 bekannt geworden.

Schneiddüsen werden bei Laserschneidprozessen zum Erreichen eines gleichmäßigen und hochwertigen Schnittergebnisses eingesetzt. Die Form der Schneiddüse wirkt sich dabei unmittelbar auf die Schneidgasströmung aus und beeinflusst somit in direkter Weise das Schnittergebnis. Mithin hat auch ein Verschleiß der Schneiddüse, der sich typischerweise im Laufe des Schneidprozesses einstellt, einen Einfluss auf das Schnittergebnis. Die Ursachen für einen Verschleiß der Schneiddüse liegen beispielsweise in anhaftender Schlacke und anhaftenden Spritzern der Schmelze des bearbeiteten Materials oder in Ausbrennungen durch streifende oder rückreflektierte Laserstrahlung sowie direkte oder streifende Kollisionen der Schneiddüse mit dem Werkstück oder anderen Bauteilen. Durch einen derartigen Verschleiß kann sich die Form der Schneiddüse derart verändern, dass auch die Strömungsverhältnisse an der Schneiddüse variieren. Dies verursacht insbesondere eine Änderung des durchströmten Querschnitts und damit der Vorzugsrichtung der Gasströmung. Die negative Folge hiervon ist zum Beispiel ein richtungsabhängig variierendes Schnittergebnis, wie beispielsweise unterschiedlich stark ausgeprägte Bartanhaftungen am Werkstück. Ferner beeinflussen die vorgenannten Verschleißursachen auch die Messung des Abstands zwischen der Schneiddüse und dem zu bearbeitenden Werkstück während des Laserschneidprozesses in negativer Weise.

Um den negativen Folgen der Verschleißursachen zu begegnen, ist es bekannt, die Schneiddüse manuell durch eine Bedienperson zu überprüfen. Dies bedingt jedoch zeit- und kostenintensive Stillstandzeiten der Laserbearbeitungsmaschine. Zudem müssen die jeweiligen Bedienpersonen über entsprechende Erfahrung verfügen, um die Überprüfung zuverlässig durchführen zu können.

Ferner ist ein Verfahren der eingangs genannten Art aus der EP 1 211 015 B1 bekannt. Anhand einer Verschleißkontroll-Einrichtung für Schneiddüsen werden mittels einer Kameraeinheit Bildsignale von dem beleuchteten Schneidkopf erzeugt und diese dann anschließend ausgewertet. Verschleißursachen, welche die Gasströmung beeinflussen, können jedoch mittels dieser herkömmlichen Auswertung der aufgenommenen Bildsignale nicht erfasst werden. Eine sichere Bewertung der Schneidfähigkeit ist nicht möglich.

Aus der EP 1 600 247 A2 ist ein Verfahren zum Ermitteln eines Verschleißzustands einer Schneiddüse einer Laserbearbeitungsmaschine bekannt, wobei die Schneiddüse mittels einer diffusen Ringlichtbeleuchtung beleuchtet wird und der Verschleißzustand der Schneiddüse infolge der Helligkeitsreduzierung von Reflexlicht ermittelt wird.

Der vorliegenden Erfindung liegt daher die Aufgabe zugrunde, ein eingangs genanntes Verfahren und eine Laserbearbeitungsmaschine zur Durchführung dieses Verfahren anzugeben, die die Nachteile des Standes der Technik überwinden. Insbesondere soll durch das erfindungsgemäße Verfahren bzw. die erfindungsgemäße Laserbearbeitungsmaschine die Prozesssicherheit und Prozessqualität beim Laserschneiden erhöht bzw. verbessert werden.

Diese Aufgabe wird durch ein Verfahren mit den Merkmalen von Anspruch 1 gelöst.

Der mit dem erfindungsgemäßen Verfahren und der erfindungsgemäßen Laserbearbeitungsmaschine verbundene Vorteil besteht im Wesentlichen darin, dass der anhand der dreidimensionalen Schneiddüsenform ermittelte Verschleißzustand auch eine Tiefeninformation über die dreidimensionale Form der Schneiddüse, d.h. eine Information über das Tiefenprofil der Schneiddüse oder anders ausgedrückt über die Topographie der Schneiddüse beinhaltet und somit eine wesentlich präzisere Beurteilung der Schneidfähigkeit der Schneiddüse möglich ist. Die präzisere Beurteilung erstreckt sich insbesondere auf den Einfluss der verschleißbedingten dreidimensionalen Veränderung der Schneiddüsenform auf die Schneidgasströmung während des Betriebs. Durch die Erfassung der dreidimensionalen Schneiddüsenform ist es vorteilhaft möglich, beispielsweise Einkerbungen, Auswürfe oder Anhaftungen an der Schneiddüse zu quantifizieren und in die Ermittlung des Verschleißzustands der Schneiddüse einfließen zu lassen. Der Verschleißzustand von Schneiddüsen kann mittels des erfindungsgemäßen Verfahrens auf objektivere Art und Weise als bisher beurteilt werden. Aufgrund des ermittelten Verschleißzustands kann beurteilt werden, ob ein Düsenwechsel erforderlich ist oder nicht. Unter der Schneiddüsenform wird erfindungsgemäß die gesamte Topographie einer Schneiddüse verstanden, d.h. die gesamte dreidimensionale Oberflächengeometrie der Schneiddüse inklusive des Gaskanals, der Schneidfront, des Düsenaußenkegels etc. Unter einem Verschleißzustand wird insbesondere eine Abweichung der dreidimensionalen Schneiddüsenform von ihrem Originalzustand (dem Sollzustand) verstanden.

Bevorzugt wird ferner der Verschleißzustand ermittelt, indem der durch eine dreidimensionale Auswertung festgestellte Istzustand der Schneiddüsenform mit einem Sollzustand der Schneiddüsenform verglichen wird. Zur Feststellung des Istzustands der Schneiddüse kann beispielsweise aus einer oder mehreren Kameraaufnahmen einer Kameraeinrichtung durch die dreidimensionale Auswertung eine dreidimensionale Ist-Form der Schneiddüse (beispielsweise in der Art von CAD-Daten) als Istzustand errechnet bzw. abgeleitet werden. Die auf diese Weise errechnete Ist-Form kann anschließend mit der Soll-Form der Schneiddüse (zum Beispiel ebenfalls in der Art von CAD-Daten) verglichen werden. Aus der Abweichung der Ist-Form von der Soll-Form bzw. der Abweichung des Istzustands von dem Sollzustand kann anschließend der Verschleißzustand ermittelt werden. Die Soll-Form bzw. der Sollzustand ist typischerweise vorbekannt und in einem Speicher einer Auswerteeinheit abgelegt.

Erfindungsgemäß kann durch Beleuchten mit strukturiertem Licht die dreidimensionale Schneiddüsenform für die Kameraeinrichtung zur dreidimensionalen Auswertung erfassbar gemacht werden. Als strukturiertes Licht können beispielsweise eine oder mehrere Linien (Lichtschnitt) oder ein Punkt (Triangulation) oder pseudozufällig verteilte Punktewolken (Random Pattern-Verfahren) zur Beleuchtung eingesetzt und unter einem Triangulationswinkel beobachtet werden. Bevorzugt wird die dreidimensionale Oberflächenform der Schneiddüse mittels eines oder mehreren unter einem Triangulationswinkel einfallenden Lichtschnitts, der als Beleuchtungslinie auf die Schneiddüse projiziert wird, von der Kameraeinrichtung aufgenommen. Durch eine kontinuierliche Erfassung des Tiefenprofils entlang des Lichtschnitts bei gleichzeitiger Lateralbewegung der Schneiddüse zur Messeinrichtung kann die 3D-Topographie der Schneiddüse (das Tiefenprofil) lückenlos erfasst werden. Die Beobachtung durch die Kameraeinrichtung kann hierbei beispielsweise senkrecht zur Schneiddüse bzw. zur Schneiddüsenfront und die Beleuchtung durch die Beleuchtungseinrichtung unter einem spitzen Winkel hierzu erfolgen. Alternativ kann beispielsweise auch die Beleuchtung durch die Beleuchtungseinrichtung senkrecht zur Schneiddüse und die Beobachtung durch die Kameraeinrichtung unter einem spitzen Winkel hierzu erfolgen. Grundsätzlich können die Kameraeinrichtung mit ihrer optischen Achse und/oder die Beleuchtungseinrichtung mit ihrer optischen Achse auch unter beliebigen Winkeln zur Schneiddüse bzw. zur Schneiddüsenfront angeordnet oder ausgerichtet sein. Hierbei kann der Scheimpflugwinkel zwischen Objektiv und Kameraeinrichtung für eine korrekte Abbildung bei einer Änderung der beobachteten Z-Position (Tiefeninformation) berücksichtigt werden. Der Triangulationswinkel ist typischerweise definiert als der Winkel zwischen der Beobachtungs- und der Beleuchtungsrichtung.

Weiterhin kann die Schneiddüse durch die Beleuchtungseinrichtung nach der Art der Auflicht-Dunkelfeldbeleuchtung beleuchtet werden. Hierbei werden durch seitliches Beleuchten der Schneiddüse lediglich Vertiefungen oder Erhöhungen an der Schneiddüse beleuchtet.

Ferner ist es möglich, die Schneiddüse durch eine in der Schneiddüsenlängsachse angeordnete Beleuchtungseinrichtung nach der Art der Auflicht-Hellfeldbeleuchtung zu beleuchten. Bei einer bevorzugten Variante der Auflicht-Hellfeldbeleuchtung wird die Schneiddüse durch die Beleuchtungseinrichtung aus einem Winkelbereich beleuchtet, der im Wesentlichen der numerischen Apertur der Kameraeinrichtung entspricht oder kleiner als die numerische Apertur der Kameraeinrichtung ist. Durch die Einhaltung dieses Winkelbereichs wird die Schneiddüse nahezu senkrecht mit einer hohen Strahlqualität beleuchtet, sodass Bereiche der Schneiddüsenoberfläche, deren Orientierung keine Reflexion der Beleuchtung in die Kameraeinrichtung erlauben, dunkler erscheinen als Bereiche der Schneiddüsenoberfläche, deren Orientierung eine direkte Reflexion in die Kameraeinrichtung ermöglichen. Damit ist ebenfalls das Erkennen und Auswerten von Vertiefungen und/oder Erhöhungen der Schneiddüsenform möglich.

Bevorzugt wird zur Erfassung der dreidimensionalen Schneiddüsenform die Schneiddüse gleichzeitig durch eine Beleuchtungseinrichtung nach der Art der Auflicht-Dunkelfeldbeleuchtung und/oder durch eine in der Schneiddüsenlängsachse angeordnete Beleuchtungseinrichtung nach der Art der Auflicht-Hellfeldbeleuchtung beleuchtet. Durch das Kombinieren mindestens zweier der erfindungsgemäßen Beleuchtungsvarianten kann eine noch genauere Beurteilung der Schneidfähigkeit einer Verschleiß unterworfenen Schneiddüse gewonnen werden. Es versteht sich, dass die erfindungsgemäßen Beleuchtungsvarianten auch mit bekannten Verfahren kombiniert werden können, die eine zweidimensionale Bewertung der Schneiddüse vornehmen.

Bevorzugt wird die dreidimensionale Form der Schneiddüsenfront erfasst. Auf diese Weise ist eine besonders präzise Ermittlung des Verschleißzustands möglich, da der Einfluss der verschleißbedingt veränderten Geometrie der Schneiddüse auf die Schneidgasführung, d.h. die Strömungsverhältnisse an der Schneiddüse, und somit die Schneidfähigkeit der Schneiddüse besonders ausgeprägt ist.

Die Aufgabe wird ferner durch eine Laserbearbeitungsmaschine zur Durchführung des erfindungsgemäßen Verfahrens mit den Merkmalen von Anspruch 7 gelöst. Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die Figuren der Zeichnung zeigen den erfindungsgemäßen Gegenstand stark schematisiert und sind nicht maßstäblich zu verstehen. Es zeigen:
- Fign. 1a, 1b: eine Querschnittansicht und eine Vorderansicht einer Schneiddüse;
- Fig. 2: eine im Lichtschnitt-Verfahren beleuchtete Schneiddüse;
- Fig. 3: eine nach der Art der Dunkelfeldbeleuchtung beleuchtete Schneiddüse; und
- Fig. 4: eine nach der Art der Hellfeldbeleuchtung beleuchtete Schneiddüse.

In der folgenden Beschreibung der Zeichnung werden für gleiche bzw. funktionsgleiche Bauteile identische Bezugszeichen verwendet.

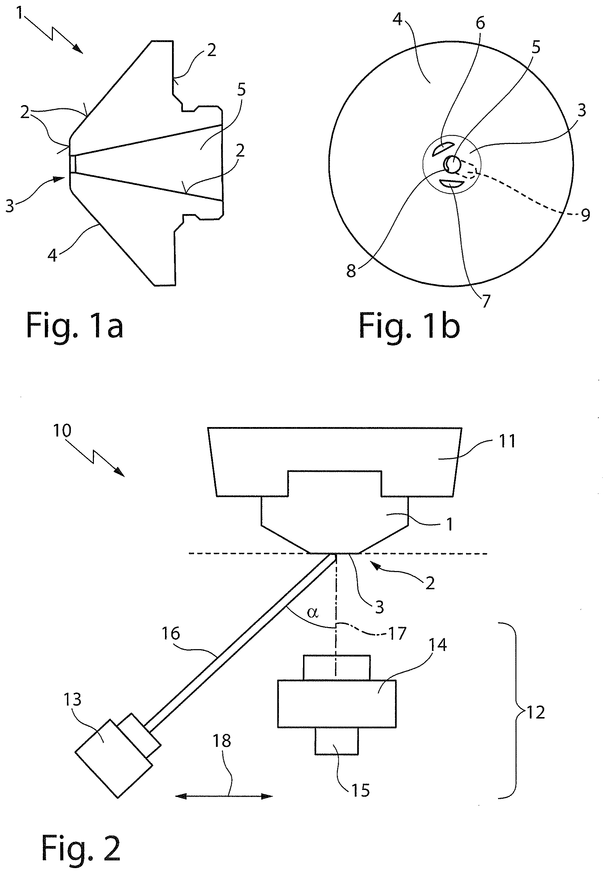

Die in den **Fign. 1a, 1b** gezeigte Schneiddüse **1** wird zum Laserschneiden von Werkstücken eingesetzt. Die Schneiddüse 1 weist eine durch eine dreidimensionale Oberflächengeometrie charakterisierte Schneiddüsenform **2** auf, die unter anderem von einer Schneidfront **3** der Schneiddüse 1, einem Düsenaußenkegel **4** der Schneiddüse 1 und einem Gaskanal **5** der Schneiddüse 1 begrenzt wird.

Während des Laserschneidens stellen sich typischerweise durch Verschleiß Defekte an der Schneiddüse 1 ein. Ein erster verschleißbedingter Defekt der Schneiddüse 1 kann eine dreidimensionale Fehlstelle **6** im Schneiddüsenmaterial sein, wie zum Beispiel Ausbrennungen durch streifende oder rückreflektierte Laserstrahlung oder Kratzer aufgrund von Kollisionen der Schneiddüse 1 mit dem Werkstück. Ein weiterer verschleißbedingter Defekt kann eine dreidimensionale Materialablagerung **7** an der Schneiddüsenfront 3 sein, wie zum Beispiel anhaftende Schlacke oder Spritzer der Schmelze des bearbeiteten Werkstückmaterials. Ferner können Verengungen **8** der Geometrie des Gaskanals 5, die beispielsweise durch Kollisionen der Schneiddüse 1 mit dem Werkstück oder anderen Bauteilen hervorgerufen wurden, oder Ausbrennungen **9** des Gaskanals 5 ebenfalls verschleißbedingte Defekte der Schneiddüse 1 darstellen. Sämtliche vorbeschriebene Defekte stellen Veränderungen der ursprünglichen Schneiddüsenform 2 dar, welche den Laserschneidprozess je nach aktuellem Verschleißzustand in negativer Weise beeinflussen können. Denn die Defekte verändern zum einen die Strömungsverhältnisse an der Schneiddüse 1, sodass in der Regel kein gleichmäßiges Schnittergebnis mehr erzielt wird, und zum anderen beeinträchtigen sie auch die zur Regelung des Schneidprozesses relevante Erfassung des Abstands zwischen der Schneiddüse 1 und dem Werkstück.

In **Fig. 2** ist eine Laserbearbeitungsmaschine **10** mit einem Laserbearbeitungskopf **11** dargestellt, der eine Schneiddüse 1 gemäß Fig. 1 und eine Sensoreinheit **12** zur Erfassung der dreidimensionalen Schneiddüsenform 2 aufweist. Die Sensoreinheit 12 umfasst eine als Laser **13** zur Erzeugung eines Laser-Lichtschnitts **16** ausgebildete Beleuchtungseinrichtung zum Beleuchten der Schneiddüse 1, eine Kameraeinrichtung **14** zum Aufnehmen der beleuchteten Schneiddüse 1 und einer Auswerteeinheit **15**. Zum Ermitteln des aktuellen Verschleißzustands der Schneiddüse 1 wird ein Verfahren mit den folgenden Verfahrensschritten durchgeführt:
Zur Erfassung der dreidimensionalen Schneiddüsenform 2, insbesondere zur Erfassung der dreidimensionalen Form der Schneiddüsenfront 3, wird die Schneiddüse 1 in einem ersten Verfahrensschritt mittels des Lasers 13 im Lichtschnitt-Verfahren beleuchtet. Hierzu wird durch den Laser 13 der Lichtschnitt 16 erzeugt und unter einem so genannten Triangulationswinkel α (zum Beispiel unter α=45°) auf die Schneiddüse 1 projiziert, sodass auf der Schneiddüse 1 eine als Laserlinie ausgebildete Beleuchtungslinie erscheint. Zur Erfassung der dreidimensionalen Schneiddüsenform 2 werden der Laser 13 und die Kameraeinrichtung 14 entsprechend zueinander angeordnet, d.h. die Kameraeinrichtung 14 wird mit ihrer optischen Achse **17** unter einem Winkel von 90° zur Schneiddüsenfront 3 und der Laser 13 unter dem Triangulationswinkel α zur Schneiddüsenfront 3 bzw. zur Schneiddüse 1 angeordnet. In einem weiteren Verfahrensschritt wird die beleuchtete Schneiddüse 1 mittels der Kameraeinrichtung 14 aufgenommen, d.h. die projizierte Laserlinie wird von der Kameraeinrichtung 14 aufgenommen. Dann kann in einem weiteren Verfahrensschritt der Verschleißzustand der Schneiddüse 1 ermittelt werden, indem die aufgenommene Kameraaufnahme dreidimensional ausgewertet wird, d.h. indem eine Information über die dreidimensionale Schneiddüsenform 2 aus der Kameraaufnahme gewonnen bzw. durch Bildverarbeitung berechnet wird.

Aus den Kameraaufnahmen lassen sich nämlich aufgrund des bekannten Triangulationswinkels α als Informationen über die dreidimensionale Schneiddüsenform 2 trigonometrisch die Z-Koordinaten (d.h. die Koordinaten senkrecht zu einer Kamera-Bildebene) aller Punkte entlang der Laserlinie berechnen. Die Auswerteeinheit 15 ist dazu programmiert, durch diese dreidimensionale Auswertung der Kameraaufnahme die Informationen über die dreidimensionale Schneiddüsenform 2 (insbesondere die Z-Koordinaten) zu gewinnen und anhand dieser Informationen den Verschleißzustand zu ermitteln. Durch die berechneten Informationen über die dreidimensionale Schneiddüsenform 2 (beispielsweis in Form der dreidimensionalen Koordinaten) kann der Istzustand der Schneiddüsenform 2 festgestellt und mit einem Sollzustand der Schneiddüsenform 2 verglichen werden. Durch den Vergleich zwischen dem Istzustand und dem Sollzustand kann auf den (aktuellen) Verschleißzustand der Schneiddüse 1 zurückgeschlossen werden. Übersteigt der ermittelte Verschleißzustand einen vorbestimmten oder zulässigen Wert, so kann ein Schneiddüsenwechsel veranlasst werden.

Die Ermittlung des Verschleißzustands wird insbesondere anhand der dreidimensionalen Fehlstellen 6 im Schneiddüsenmaterial und/oder anhand der dreidimensionalen Materialablagerungen 7 an der Schneiddüse 1 und/oder anhand der Geometrie des Schneiddüsengaskanals 5 ermittelt. Diese Fehlstellen 6, Materialablagerungen 7 und Geometrieveränderungen 8, 9 stellen Abweichungen des Istzustands vom Sollzustand dar. Zum Ermitteln des Verschleißzustands anhand der Geometrie des Schneiddüsengaskanals 5 kann beispielsweise die Größe des Durchmessers des Gaskanals 5 oder dessen Rundheit herangezogen werden. Abweichungen von der ursprünglichen Größe des Durchmessers oder von der ursprünglichen Sollgeometrie können sich zum Beispiel durch Kollisionen mit Werkstücken oder durch die vorbeschriebenen Auswürfe und Anhaftungen einstellen. Zur Erfassung der vollständigen dreidimensionalen Schneiddüsenform 2 sind die Sensoreinheit 12 und die Schneiddüse 1, insbesondere entlang einer zur Schneidfront 3 parallelen Richtung **18**, relativ zueinander verfahrbar angeordnet. Somit kann durch Relativbewegen der von dem Laser 13 projizierten Laserlinie zur Schneiddüse 1 die gesamte Schneiddüsenform 2 abgefahren und erfasst werden.

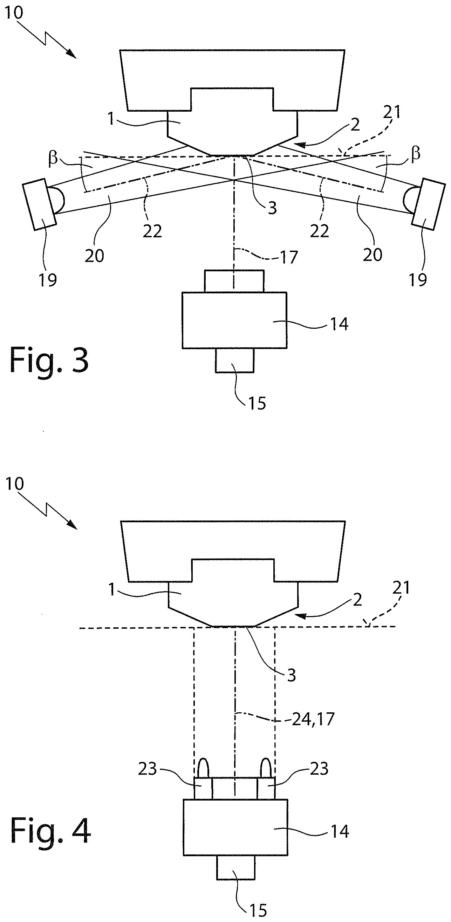

Bei der in **Fig. 3** dargestellten Laserbearbeitungsmaschine 10 sind zum Beleuchten der Schneiddüse 1 zwei als Auflicht-Dunkelfeldbeleuchtung ausgebildete Beleuchtungseinrichtungen **19** vorgesehen. Entsprechend wird bei einem Verfahren zur Erfassung der dreidimensionalen Schneiddüsenform 2 im ersten Verfahrensschritt die Schneiddüse 1 durch die Beleuchtungseinrichtung 19 nach der Art der Auflicht-Dunkelfeldbeleuchtung beleuchtet. Hierzu wird die Schneiddüse 1 mit seitlichen Beleuchtungskegeln **20** beleuchtet, die unter einem Einfallswinkel β von ca. 15° zur Ebene **21** der Schneiddüsenfront 3 auf die Schneiddüse 1 gerichtet sind und die Schneiddüse 1 bevorzugt umschließen. Die Beleuchtungseinrichtungen 19 und die Kameraeinrichtung 14 sind hierfür entsprechend zueinander angeordnet, d.h. die Kameraeinrichtung 14 ist mit ihrer optischen Achse 17 in einem Winkel von ca. 90° zur Schneiddüsenfront 3 angeordnet, und die Beleuchtungseinrichtungen 19 sind mit ihren optischen Achsen **22** unter dem Winkel β=15° zur Ebene 21 der Schneiddüsenfront 3 angeordnet. Dadurch werden die dreidimensionalen Defekte und Unebenheiten (Vertiefungen 6 oder Erhöhungen 7), die von der Ebene 21 abweichen, im Auflicht-Dunkelfeld sichtbar. Bei der Auflicht-Dunkelfeldbeleuchtung werden die Beleuchtungskegel 20 derart ausgerichtet, dass die von der Schneiddüse 1 direkt reflektierte Strahlung nicht auf die Kameraeinrichtung 14 trifft, sondern lediglich an den Unebenheiten abgelenkte Strahlung (beispielsweise gestreute, gebeugte oder gebrochene Strahlung) zur Kameraeinrichtung 14 gelangt. Im nächsten Verfahrensschritt wird die auf diese Weise beleuchtete Schneiddüse 1 von der Kameraeinrichtung 14 aufgenommen und der Verschleißzustand anhand einer durch dreidimensionale Auswertung der Kameraaufnahme gewonnenen Information über die Schneiddüsenform 2 ermittelt. Beim Auswerten der Auflicht-Dunkelfeld-Kameraaufnahmen durch die Auswerteeinheit 15 können beispielsweise durch einen statischen oder dynamischen Schwellwert oder einen Kantendetektionsalgorithmus (beispielsweise Canny) beleuchtete Bereiche extrahiert werden.

**Fig. 4** zeigt schließlich eine Laserbearbeitungsmaschine 10, bei der anders als in den vorhergehenden Figuren eine als Auflicht-Hellfeldbeleuchtung (z.B. als Diodenlaser) **23** ausgebildete und in der Schneiddüsenlängsachse **24** angeordnete Beleuchtungseinrichtung zum Beleuchten der Schneiddüse 1 vorgesehen ist. Bei einem Verfahren zur Erfassung der dreidimensionalen Schneiddüsenform 2 wird in einem ersten Verfahrensschritt die Schneiddüse 1 zumindest teilweise durch die Auflicht-Hellfeldbeleuchtung 23 aus einem Winkelbereich (senkrecht mit einer hohen Strahlqualität) beleuchtet, der im Wesentlichen der numerischen Apertur der Kameraeinrichtung 14 entspricht. Zur Erfassung der dreidimensionalen Schneidfront 3 werden sowohl die Auflicht-Hellfeldbeleuchtung 23 als auch die Kameraeinrichtung 14 mit ihren optischen Achsen 17 hierzu unter 90° zur Schneiddüsenfront 3 zueinander angeordnet. An der Schneiddüse 1 durch Verschleiß gebildete Defekte und Unebenheiten, insbesondere an der Schneiddüsenfront 3 vorhandene Defekte, deren Erhöhungen oder Vertiefungen von der senkrecht beleuchteten Ebene 21 der Schneiddüsenfront 3 abweichen, reflektieren das Beleuchtungslicht nicht direkt zurück zur Kameraeinrichtung 14, sondern zumindest teilweise in Richtungen, die nicht mehr von der Kameraeinrichtung 14 erfasst werden können. In der im nächsten Verfahrensschritt aufgenommenen Kameraaufnahme der beleuchteten Schneiddüse 1 erscheinen die dreidimensionalen Defekte somit dunkel (oder dunkler) und unterscheiden sich daher von der ebenen (bzw. makellosen) Schneidfront 3. Im letzten Verfahrensschritt lässt sich der Verschleißzustand anhand der durch dreidimensionale Auswertung der Kameraaufnahme gewonnenen Information über die Schneiddüsenform 2 ermitteln. Zur Auswertung der Kameraaufnahmen und zur Ermittlung des Verschleißzustands ist ebenfalls eine Auswerteinheit 15 vorgesehen.

Anders als in den Figuren gezeigt, kann die dreidimensionale Schneiddüsenform 2 gleichzeitig durch mindestens zwei der vorbeschriebenen Beleuchtungsvarianten erfasst werden, d.h. die Sensoreinheit 12 der Laserbearbeitungsmaschine 10 kann beispielsweise eine einzige Kameraeinrichtung 14 für die Lichtschnitt-Beleuchtung und die Dunkelfeldbeleuchtung oder eine Kameraeinrichtung 14 für die Lichtschnitt-Beleuchtung und eine Kameraeinrichtung 14 für die Dunkelfeldbeleuchtung sowie eine Beleuchtungseinrichtung für die Lichtschnitt-Beleuchtung 13 und eine Beleuchtungseinrichtung für die Dunkelfeldbeleuchtung 19 aufweisen. Durch die zeitgleiche (bzw. parallele) Beobachtung mittels unterschiedlicher Beleuchtungsvarianten kann die Genauigkeit der Ermittlung des Verschleißzustands der Schneiddüse 1 weiter erhöht werden.

## Patentansprüche

1. Verfahren zum Ermitteln eines Verschleißzustands einer Schneiddüse (1) einer Laserbearbeitungsmaschine, wobei der Verschleißzustand der Schneiddüse (1) mit folgenden Verfahrensschritten ermittelt wird:
a) Beleuchten der Schneiddüse (1) mittels einer Beleuchtungseinrichtung (13; 19; 23),
b) Aufnehmen der beleuchteten Schneiddüse (1) mittels einer Kameraeinrichtung (14),
c) Ermitteln des Verschleißzustands der Schneiddüse (1) durch Auswerten der aufgenommenen Kameraaufnahme,
**dadurch gekennzeichnet,**
**dass** zur Erfassung der dreidimensionalen Schneiddüsenform (2) die Beleuchtungseinrichtung (13; 19; 23) und die Kameraeinrichtung (14) derart zueinander angeordnet werden, dass der Verschleißzustand anhand einer durch dreidimensionale Auswertung der Kameraaufnahme gewonnenen Information über das Tiefenprofil der Schneiddüsenform (2) ermittelt wird, und dass zur Erfassung der dreidimensionalen Schneiddüsenform (2) die Schneiddüse (1) durch die Beleuchtungseinrichtung (13) mit strukturiertem Licht, insbesondere im Lichtschnitt-Verfahren, beleuchtet wird.

2. Verfahren nach Anspruch 1, **dadurch gekennzeichnet, dass** der Verschleißzustand ermittelt wird, indem der durch eine dreidimensionale Auswertung festgestellte Istzustand der Schneiddüsenform (2) mit einem Sollzustand der Schneiddüsenform (2) verglichen wird.

3. Verfahren nach einem der Ansprüche 1 oder 2, **dadurch gekennzeichnet, dass** der Verschleißzustand anhand von dreidimensionalen Fehlstellen (6) im Schneiddüsenmaterial und/oder anhand von dreidimensionalen Materialablagerungen (7) an der Schneiddüse (1) und/oder anhand der Geometrie des Schneiddüsengaskanals (5) ermittelt wird.

4. Verfahren nach einem der vorhergehenden Ansprüche, **dadurch gekennzeichnet, dass** zur Erfassung der dreidimensionalen Schneiddüsenform (2) die Schneiddüse (1) gleichzeitig durch eine Beleuchtungseinrichtung (19) nach der Art der Auflicht-Dunkelfeldbeleuchtung und/oder durch eine in der Schneiddüsenlängsachse (24) angeordnete Beleuchtungseinrichtung (23) nach der Art der Auflicht-Hellfeldbeleuchtung beleuchtet wird.

5. Verfahren nach Anspruch 4, **dadurch gekennzeichnet, dass** die Schneiddüse (1) durch die Auflicht-Hellfeldbeleuchtungseinrichtung (23) aus einem Winkelbereich beleuchtet wird, der im Wesentlichen der numerischen Apertur der Kameraeinrichtung (14) entspricht oder kleiner als die numerische Apertur der Kameraeinrichtung (14) ist.

6. Verfahren nach einem der vorhergehenden Ansprüche, **dadurch gekennzeichnet, dass** die dreidimensionale Form einer Schneidfront (3) der Schneiddüse (1) erfasst wird.

7. Laserbearbeitungsmaschine (10) zur Durchführung des Verfahrens nach einem der vorhergehenden Ansprüche, umfassend:
einen Laserbearbeitungskopf (11) mit einer daran angeordneten Schneiddüse (1), und
eine Sensoreinheit (12) zur Erfassung der Schneiddüsenform (2) mit einer Auswerteeinheit (15), die programmiert ist, den Verschleißzustand der Schneiddüse (1) anhand der Schneiddüsenform (2) zu ermitteln,
wobei die Sensoreinheit (12) eine Beleuchtungseinrichtung (13; 19; 23) zum Beleuchten der Schneiddüse (1) und eine Kameraeinrichtung (14) zum Aufnehmen der beleuchteten Schneiddüse (1) umfasst,
**dadurch gekennzeichnet,**
**dass** die Beleuchtungseinrichtung als Laser (13) zur Erzeugung eines Laser-Lichtschnitts (16) ausgebildet ist und die Auswerteeinheit (15) programmiert ist, durch dreidimensionale Auswertung der Kameraaufnahme eine Information über die dreidimensionale Schneiddüsenform (2) zu gewinnen und anhand dieser Information den Verschleißzustand zu ermitteln.

8. Laserbearbeitungsmaschine nach Anspruch 7, **dadurch gekennzeichnet, dass** zur Erfassung der dreidimensionalen Schneiddüsenform (2) die Sensoreinheit (12) und die Schneiddüse (1) relativ zueinander verfahrbar angeordnet sind.

9. Laserbearbeitungsmaschine nach Anspruch 7 oder 8, **dadurch gekennzeichnet, dass** die Beleuchtungseinrichtung auch als Auflicht-Dunkelfeldbeleuchtung (19) und/oder als Auflicht-Hellfeldbeleuchtung (23) ausgebildet ist.

## Claims

1. Method for establishing a wear state of a cutting nozzle (1) of a laser processing machine, wherein the wear state of the cutting nozzle (1) is established by the following method steps:
a) illuminating the cutting nozzle (1) using an illumination device (13; 19; 23),
b) recording the illuminated cutting nozzle (1) using a camera device (14),
c) establishing the wear state of the cutting nozzle (1) by evaluating the camera exposure recorded,
**characterized in that**
in order to detect the three-dimensional cutting nozzle shape (2), the illumination device (13; 19; 23) and the camera device (14) are arranged relative to each other in such a manner that the wear state is established using information relating to the depth profile of the cutting nozzle shape (2) which is obtained by means of three-dimensional evaluation of the camera exposure, and that in order to detect the three-dimensional cutting nozzle shape (2), the cutting nozzle (1) is illuminated by the illumination device (13) with structured light, in particular using a light-section method.

2. Method according to claim 1, **characterised in that** the wear state is established by comparing the actual state of the cutting nozzle shape (2) established by means of a three-dimensional evaluation with a desired state of the cutting nozzle shape (2).

3. Method according to claim 1 or 2, **characterised in that** the wear state is established based on three-dimensional defect locations (6) in the cutting nozzle material and/or based on three-dimensional material deposits (7) on the cutting nozzle (1) and/or based on the geometry of the cutting nozzle gas channel (5).

4. Method according to any one of the preceding claims, **characterised in that**, in order to detect the three-dimensional cutting nozzle shape (2), the cutting nozzle (1) is illuminated simultaneously by an illumination device (19) in the manner of incident-light darkfield illumination and/or by an illumination device (23) which is arranged in the cutting nozzle longitudinal axis (24) in the manner of incident-light brightfield illumination.

5. Method according to claim 4, **characterised in that** the cutting nozzle (1) is illuminated by the incident-light brightfield illumination device (23) from an angular range which substantially corresponds to the numerical aperture of the camera device (14) or is smaller than the numerical aperture of the camera device (14).

6. Method according to any one of the preceding claims, **characterised in that** the three-dimensional shape of a cutting front (3) of the cutting nozzle (1) is detected.

7. Laser processing machine (10) for carrying out the method according to any one of the preceding claims comprising:
a laser processing head (11) having a cutting nozzle (1) which is arranged thereon, and
a sensor unit (12) for detecting the cutting nozzle shape (2), with an evaluation unit (15) which is programmed to establish the wear state of the cutting nozzle (1) based on the cutting nozzle shape (2),
wherein the sensor unit (12) comprises an illumination device (13; 19; 23) for illuminating the cutting nozzle (1) and a camera device (14) for recording the illuminated cutting nozzle (1),
**characterized in that**
the illumination device is constructed as a laser (13) for producing a laser light-section (16) and the evaluation unit (15) is programmed to obtain information relating to the three-dimensional cutting nozzle shape (2) by three-dimensional evaluation of the camera exposure, and to establish the wear state based on this information.

8. Laser processing machine according to claim 7, **characterised in that**, in order to detect the three-dimensional cutting nozzle shape (2), the sensor unit (12) and the cutting nozzle (1) are arranged so as to be able to be moved relative to each other.

9. Laser processing machine according to claim 7 or claim 8, **characterised in that** the illumination device is also constructed as an incident-light darkfield illumination unit (19) and/or as an incident-light brightfield illumination unit (23).

## Revendications

1. Procédé de détermination d'un état d'usure d'une buse de découpe (1) d'une machine d'usinage au laser, l'état d'usure de ladite buse de découpe (1) étant déterminé par les étapes opératoires suivantes :
a) illumination de la buse de découpe (1) au moyen d'un dispositif d'illumination (13; 19; 23),
b) enregistrement de ladite buse de découpe (1) illuminée, au moyen d'un dispositif à caméra (14),
c) détermination de l'état d'usure de ladite buse de découpe (1) par évaluation de l'enregistrement saisi par la caméra,
**caractérisé par le fait**
**que**, pour détecter la forme tridimensionnelle (2) de la buse de découpe, le dispositif d'illumination (13 ; 19 ; 23) et le dispositif à caméra (14) sont placés, l'un par rapport à l'autre, de façon telle que l'état d'usure soit déterminé à l'appui d'une information acquise par évaluation tridimensionnelle de l'enregistrement saisi par la caméra, et relative au profil de profondeur de ladite forme (2) de la buse de découpe ; et que, pour détecter ladite forme tridimensionnelle (2) de la buse de découpe, ladite buse de découpe (1) est illuminée, par ledit dispositif d'illumination (13), avec une lumière structurée et notamment suivant le procédé de coupe optique.

2. Procédé selon la revendication 1, **caractérisé par le fait que** l'état d'usure est déterminé par comparaison de l'état effectif de la forme (2) de la buse de découpe, constaté par une évaluation tridimensionnelle, avec un état de consigne de ladite forme (2) de la buse de découpe.

3. Procédé selon l'une des revendications 1 ou 2, **caractérisé par le fait que** l'état d'usure est déterminé sur la base de zones défectueuses tridimensionnelles (6), dans le matériau de la buse de découpe, et/ou sur la base d'accumulations tridimensionnelles de matière (7) sur ladite buse de découpe (1), et/ou sur la base de la géométrie du canal (5) par lequel les gaz circulent dans ladite buse de découpe.

4. Procédé selon l'une des revendications précédentes, **caractérisé par le fait que**, pour détecter la forme tridimensionnelle (2) de la buse de découpe, ladite buse de découpe (1) est simultanément illuminée suivant le mode d'illumination à lumière incidente sur fond noir, par un dispositif d'illumination (19) ; et/ou, suivant le mode d'illumination à lumière incidente sur fond clair, par un dispositif d'illumination (23) placé dans l'axe longitudinal (24) de ladite buse de découpe.

5. Procédé selon la revendication 4, **caractérisé par le fait que** la buse de découpe (1) est illuminée, par le dispositif (23) d'illumination à lumière incidente sur fond clair, à partir d'une plage angulaire qui correspond, pour l'essentiel, à l'ouverture numérique du dispositif à caméra (14) ou est plus petite que ladite ouverture numérique du dispositif à caméra (14).

6. Procédé selon l'une des revendications précédentes, **caractérisé par** une détection de la forme tridimensionnelle d'une zone frontale de découpe (3) de la buse de découpe (1).

7. Machine (10) d'usinage au laser, dédiée à la mise en oeuvre du procédé selon l'une des revendications précédentes, comprenant :
une tête (11) d'usinage au laser, sur laquelle une buse de découpe (1) est implantée, et
une unité de détection (12) conçue pour détecter la forme (2) de ladite buse de découpe, et dotée d'une unité d'évaluation (15) programmée pour déterminer l'état d'usure de ladite buse de découpe (1) à l'appui de ladite forme (2) de la buse de découpe,
ladite unité de détection (12) incluant un dispositif d'illumination (13 ; 19 ; 23) conçu pour illuminer la buse de découpe (1), et un dispositif à caméra (14) affecté à l'enregistrement de ladite buse de découpe (1) illuminée,
**caractérisée par le fait**
**que** le dispositif d'illumination est réalisé sous la forme d'un laser (13) conçu pour engendrer une nappe (16) de lumière laser, et l'unité d'évaluation (15) est programmée en vue d'acquérir, par évaluation tridimensionnelle de l'enregistrement saisi par la caméra, une information relative à la forme tridimensionnelle (2) de la buse de découpe, et en vue de déterminer l'état d'usure sur la base de cette information.

8. Machine d'usinage au laser, selon la revendication 7, **caractérisée par le fait que**, pour détecter la forme tridimensionnelle (2) de la buse de découpe, l'unité de détection (12) et ladite buse de découpe (1) sont agencées avec faculté de déplacement mutuel.

9. Machine d'usinage au laser, selon la revendication 7 ou 8, **caractérisée par le fait que** le dispositif d'illumination est également réalisé sous la forme d'une illumination (19) à lumière incidente sur fond noir, et/ou sous la forme d'une illumination (23) à lumière incidente sur fond clair.
